# EUROPÄISCHE PATENTSCHRIFT

(11) **EP 3 324 252 B1**
(45) Veröffentlichungstag und Bekanntmachung des Hinweises auf die Patenterteilung: **17.06.2020**
(21) Anmeldenummer: 17200905.2
(22) Anmeldetag: 09.11.2017
(51) Int. Cl.: G05B 9/02, G05B 9/03

(54) **NOT-BEFEHLSGERÄT UND SICHERHEITSEINRICHTUNG MIT EINEM NOT-BEFEHLSGERÄT**
EMERGENCY COMMAND DEVICE AND SAFETY DEVICE INCLUDING SUCH A DEVICE
APPAREIL DE COMMANDE D'URGENCE ET DISPOSITIF DE SÉCURITÉ DOTÉ D'UN TEL APPAREIL

(30) Priorität: 21.11.2016 DE 102016122370
(43) Veröffentlichungstag der Anmeldung: 23.05.2018
(73) Patentinhaber: Pilz GmbH & Co. KG, 73760 Ostfildern (DE)
(72) Erfinder: Bellingkrodt, Martin, 73760 Ostfildern (DE); Seid, Jörg, 73760 Ostfildern (DE); Birt, Sergej, 73760 Ostfildern (DE)
(74) Vertreter: Schäperklaus, Jochen

(56) Entgegenhaltungen:
- EP-A1- 1 780 738
- DE-A1-102006 058 708
- DE-A1-102014 113 135
- US-A- 5 263 570
- US-B1- 9 115 848

## Beschreibung

Die vorliegende Erfindung betrifft ein Not-Befehlsgerät, umfassend einen ersten und einen zweiten Sicherheitseingang, die an eine Steuerungs- und Auswerteeinheit anschließbar sind und im Betrieb des Not-Befehlsgeräts von der Steuerungs- und Auswerteeinheit mit einer Eingangsspannung versorgt werden können, einen ersten und einen zweiten Sicherheitsausgang, die an die Steuerungs- und Auswerteeinheit anschließbar sind, einen ersten elektrischen Schaltpfad, der sich zwischen dem ersten Sicherheitseingang und dem ersten Sicherheitsausgang erstreckt, einen zweiten elektrischen Schaltpfad, der sich zwischen dem zweiten Sicherheitseingang und dem zweiten Sicherheitsausgang erstreckt, eine Not-Betätigungseinheit, die ein manuell auslösbares Betätigungselement, das mit zwei mechanischen zwangsöffnenden Schaltermitteln verbunden ist, und ein Hintergrundelement aufweist, wobei ein erstes Schaltermittel im ersten elektrischen Schaltpfad angeordnet ist und ein zweites Schaltermittel im zweiten elektrischen Schaltpfad angeordnet ist, sowie eine Leuchteinheit mit einer Gruppe roter Leuchtdioden, die so angeordnet sind, dass sie das Betätigungselement hinterleuchten können, und mit einer Gruppe gelber Leuchtdioden, die so angeordnet sind, dass sie das Hintergrundelement hinterleuchten können, zumindest ein Spannungserfassungsmittel, insbesondere ein Komparatormittel, zur Erfassung einer elektrischen Ausgangsspannung an zumindest einem der Sicherheitsausgänge und eine Blinkschaltungseinrichtung. Ferner betrifft die vorliegende Erfindung eine Sicherheitseinrichtung zum Überführen einer gefahrbringenden Maschine oder technischen Anlage in einen gefahrlosen Betriebszustand, umfassend eine Steuerungs- und Auswerteeinheit, die zumindest einen Sicherheitsausgang aufweist, an den ein Stellglied angeschlossen ist, welches dazu ausgebildet ist, die Maschine oder technische Anlage nach der Aktivierung in den gefahrlosen Betriebszustand zu überführen, sowie zumindest ein Not-Befehlsgerät, das an die Steuerungs- und Auswerteeinheit angeschlossen ist.

Von Maschinen und technischen Anlagen gehen während ihres Betriebs häufig nicht unerhebliche Gefahren für Menschen und die Umgebung aus. Um die Sicherheit derartiger Maschinen oder technischen Anlagen zu gewährleisten, sind Sicherheitseinrichtungen mit einem manuell auslösbaren Not-Befehlsgerät aus dem Stand der Technik in unterschiedlichen Ausführungsformen bekannt. Zu unterscheiden ist in diesem Zusammenhang zwischen Not-Aus-Sicherheitseinrichtungen, die bei Gefahren elektrischen Ursprungs, insbesondere bei der Gefahr eines elektrischen Schlags, eine elektrische Versorgung der Maschine oder technischen Anlage deaktivieren und Not-Halt-Sicherheitseinrichtungen, die Gefahren abwenden, indem sie die Maschine beziehungsweise technische Anlage in einen gefahrlosen Zustand (Not-Halt-Zustand) überführen.

Einschlägige Normen erfordern, dass sich das Not-Befehlsgerät der Sicherheitssteuerung optisch derart von seiner Umgebung abhebt, dass es vom Bedienpersonal im Notfall schnell als solches erkannt werden kann. Das manuell auslösbare Betätigungselement muss permanent in der Signalfarbe Rot erscheinen. Demgegenüber muss ein Hintergrundelement des Betätigungselements, welches ein Kontrastelement für das Betätigungselement bildet und zum Beispiel durch ein Ringelement, das sich um das Betätigungselement herum erstreckt, gebildet sein kann, in der Signalfarbe Gelb erscheinen. Bei sehr einfach gestalteten Not-Befehlsgeräten werden unbeleuchtete Betätigungselemente aus einem rot eingefärbten Kunststoff und unbeleuchtete Hintergrundelemente aus einem gelb eingefärbten Kunststoff verwendet. Weiterhin sind aus dem Stand der Technik bereits Not-Befehlsgeräte bekannt, die ein hinterleuchtetes Betätigungselement und ein hinterleuchtetes Hintergrundelement aufweisen. Das Betätigungselement ist aus einem roten, transparenten Kunststoff hergestellt und wird beleuchtet. Das Hintergrundelement ist aus einem gelben, ebenfalls transparenten Kunststoff hergestellt und wird ebenfalls beleuchtet. In einem unbeleuchteten Zustand erscheinen das Betätigungselement und das Hintergrundelement weiterhin in den Signalfarben Rot und Gelb.

Bei den aus dem Stand der Technik bekannten Sicherheitseinrichtungen besteht häufig das Problem, dass insbesondere bei komplexeren Maschinen oder technischen Anlagen, die mehrere Not-Befehlsgeräte aufweisen, die Lokalisierung desjenigen Not-Befehlsgeräts, das vom Bedienpersonal manuell ausgelöst wurde, sehr aufwändig mittels der Steuerungs- und Auswerteeinheit erfolgen muss. Daraus resultiert insbesondere ein hoher Programmieraufwand für die Programmierung der Steuerungs- und Auswerteeinheit.

Die DE 10 2014 113 135 A1 offenbart ein Not-Befehlsgerät der eingangs genannten Art mit einer Visualisierungseinrichtung, die das Not-Befehlsgerät optisch verändern kann. Die Visualisierungseinrichtung weist farbige LEDs auf, die innerhalb eines Gehäuses des Not-Befehlsgerät angeordnet sind. Das Gehäuse ist zweitteilig ausgebildet, mit einem ersten Gehäuseteil als Betätigungselement in Form eines pilzförmigen Tasters und einem zweiten Gehäuseteil als Basis. Die beiden Gehäuseteile sind aus einem transparenten oder transluzenten Material hergestellt, so dass sie im unbeleuchteten Zustand farblos oder in der Farbe des Hintergrunds, auf dem sie angeordnet sind, erscheinen. Sind die LEDs ausgeschaltet, ist das Not-Befehlsgerät somit nicht als solches erkennbar. Erst sobald die LEDs aktiviert werden, nimmt das Not-Befehlsgerät seine charakteristische Farbgebung an, indem er durch die LEDs in den entsprechenden Farben beleuchtet wird. Dabei wird bevorzugt die Basis mit gelben LEDs und das Betätigungselement mit roten LEDs beleuchtet. Die Visualisierungseinrichtung kann einen ersten Anzeigezustand annehmen, in dem das Not-Befehlsgerät in einer normgerechten Weise, also mit einem in roter Farbe hervorgehobenen Betätigungselement vor einem gelben Hintergrund, dargestellt ist sowie einen zweiten Anzeigezustand, in dem das Not-Befehlsgerät verdeckt ist oder neutral angezeigt wird. Ferner kann die Visualisierungseinrichtung einen dritten Anzeigezustand einnehmen, über den die Visualisierungseinrichtung signalisiert, ob die Überwachungseinheit funktionslos ist. Beispielsweise können die LEDs im Falle einer defekten Überwachungseinheit des Not-Befehlsgeräts blinken. Somit signalisiert das Blinken optisch das Vorliegen eines Defekts des Not-Befehlsgeräts.

Aus der US 9,115,848 B1 ist ein Not-Befehlsgerät mit einem Leuchtelement bekannt, wobei das Leuchtelement beleuchtet wird, um anzuzeigen, dass das Not-Befehlsgerät ausgelöst wurde.

Die US 5,263,570 offenbart ein Förderband mit mehreren Not-Befehlsgeräten, die in Förderrichtung voneinander beabstandet angeordnet sind. Jedem Not-Befehlsgerät ist eine externe Leuchteinheit mit einer Leuchtdiode zugeordnet. Die Leuchtdiode der externen Leuchteinheit leuchtet, wenn das zugehörige Not-Befehlsgerät betätigt wurde.

Die vorliegende Erfindung macht es sich zur Aufgabe, ein Not-Befehlsgerät sowie eine Sicherheitseinrichtung der eingangs genannten Art zur Verfügung zu stellen, bei denen das manuelle Auslösen des Not-Befehlsgeräts auf besonders einfache Weise erfasst werden kann.

Die Lösung dieser Aufgabe liefern ein Not-Befehlsgerät der eingangs genannten Art mit den Merkmalen des kennzeichnenden Teils des Anspruchs 1 sowie eine gattungsgemäße Sicherheitseinrichtung mit den Merkmalen des kennzeichnenden Teils des Anspruchs 10. Die Unteransprüche betreffen vorteilhafte Weiterbildungen der Erfindung.

Ein erfindungsgemäßes Not-Befehlsgerät zeichnet sich dadurch aus, dass die Blinkschaltungseinrichtung an das Spannungserfassungsmittel angeschlossen ist oder dieses umfasst, wobei die Blinkschaltungseinrichtung dazu eingerichtet ist, bei einem von dem Spannungserfassungsmittel erfassten Unterschreiten eines voreingestellten oder voreinstellbaren Schwellwertes der Ausgangsspannung ein periodisches oder nicht-periodisches Blinken der gelben Leuchtdioden und/oder der roten Leuchtdioden der Leuchteinrichtung zu aktivieren. Das erfindungsgemäße Not-Befehlsgerät ermöglicht auf besonders einfache Weise eine optische Visualisierung des Not-Befehlsgeräts, wenn dessen Betätigungselement vom Bedienpersonal manuell ausgelöst wurde. In einem störungsfreien Betrieb der mit dem aktivierten Not-Befehlsgerät ausgestatteten gefahrbringenden Maschine oder technischen Anlage sind beide Schaltermittel der Not-Betätigungseinheit in einer Schließstellung, so dass die Ausgangsspannung an den beiden Sicherheitsausgängen jeweils der Eingangsspannung an den Sicherheitseingängen entspricht. Die roten und gelben Leuchtdioden der Leuchteinrichtung werden mit einem elektrischen Betriebsstrom versorgt, so dass sie permanent leuchten. Das Betätigungselement wird dabei rot hinterleuchtet und das Hintergrundelement wird gelb hinterleuchtet, so dass das Not-Befehlsgerät die einschlägigen Normen in Bezug auf die geforderten Signalfarben des Betätigungselements und des Hintergrundelements erfüllt. Das Not-Befehlsgerät kann somit vom Bedienpersonal optisch als solches erkannt werden. Da das Betätigungselement und das Hintergrundelement aktiv in den vorgeschriebenen Signalfarben Rot beziehungsweise Gelb leuchten, kann ferner erkannt werden, dass das Not-Befehlsgerät tatsächlich aktiviert und damit betriebsbereit ist.

Wenn beim Auftreten einer Gefahrensituation das Betätigungselement des Not-Befehlsgeräts vom Bedienpersonal manuell ausgelöst wird, werden die beiden zwangsöffnenden Schaltermittel, insbesondere Taster, der Not-Betätigungseinheit geöffnet, so dass es zu einer Spannungsdifferenz zwischen den Eingangsspannungen an den beiden Sicherheitseingängen und den Ausgangsspannungen an den beiden Sicherheitsausgängen kommt. Die Ausgangsspannungen an den Sicherheitsausgängen sind geringer als die Eingangsspannungen an den beiden Sicherheitseingängen. Die Blinkschaltungseinrichtung ist so ausgebildet, dass bei einem von dem Spannungserfassungsmittel, insbesondere dem Komparatormittel, erfassten Absinken der Ausgangsspannung an einem der Sicherheitsausgänge unter den voreingestellten oder voreinstellbaren Schwellwert die gelben Leuchtdioden der Leuchteinrichtung derart angesteuert werden, dass sie nicht mehr konstant leuchten, sondern periodisch oder alternativ auch nicht-periodisch blinken. Der Schwellwert der Ausgangsspannung an einem der Sicherheitsausgänge, bei deren Unterschreiten die Blinkschaltungseinrichtung das Blinken der gelben Leuchtdioden der Leuchteinrichtung aktiviert, kann zum Beispiel auf 50 % bis 75 % des Betrags der Eingangsspannung am Sicherheitseingang des betreffenden Schaltpfades gesetzt sein. Durch das Blinken der gelben Leuchtdioden der Leuchteinrichtung, die das Hintergrundelement hinterleuchten, ist es auf einfache Weise möglich, das manuelle Auslösen des Betätigungselements, welches die Schaltermittel und damit auch die beiden elektrischen Schaltpfade öffnet, optisch zu signalisieren. Da das im störungsfreien Betrieb permanent gelb hinterleuchtete Hintergrundelement gemäß den einschlägigen Normen nicht sicherheitsrelevant ist, ist es zulässig, dass die gelben Leuchtdioden der Leuchteinrichtung nach dem manuellen Auslösen des Betätigungselements nicht permanent leuchten, sondern blinken. Dieses Blinken der gelben Leuchtdioden kann dem Bedienpersonal auf einfache Weise optisch signalisieren, dass das betreffende Not-Befehlsgerät ausgelöst wurde. Eine aufwändige Lokalisierung desjenigen Not-Befehlsgeräts, welches vom Bedienpersonal ausgelöst wurde, mittels der Steuerungs- und Auswerteeinheit ist somit in vorteilhafter Weise nicht erforderlich. Somit kann der Programmieraufwand für die Programmierung der Steuerungs- und Auswerteeinheit verringert werden.

Grundsätzlich ist es auch denkbar, dass die Blinkschaltungseinrichtung nach dem Auslösen des Betätigungselements und Öffnen der beiden Schaltermittel das Blinken der roten Leuchtdioden der Leuchteinrichtung aktiviert. Dieses ist jedoch zumindest derzeit (noch) nicht zulässig, da die einschlägigen Normen fordern, dass das Betätigungselement permanent in der Signalfarbe Rot leuchten muss. Das Blinken der roten Leuchtdioden der Leuchteinrichtung hätte demgegenüber zur Folge, dass das Betätigungselement nicht permanent leuchtet, sondern dessen Beleuchtung periodisch oder nicht-periodisch einbeziehungsweise ausgeschaltet wird.

In einer vorteilhaften Ausführungsform wird vorgeschlagen, dass das Spannungserfassungsmittel mittels einer Messleitung an zumindest einen der beiden Sicherheitsausgänge angeschlossen ist.

In einer besonders vorteilhaften Ausführungsform besteht die Möglichkeit, dass das Not-Befehlsgerät eine Versorgungschaltung, die an die beiden Sicherheitseingänge angeschlossen ist, und eine geregelte Stromquelle umfasst, die an die Versorgungsschaltung und an die Leuchteinheit angeschlossen ist. Die Versorgungsschaltung ist dazu in der Lage, die geregelte Stromquelle für den Betrieb der Leuchteinheit mit einer für ihren Betrieb notwendigen Betriebsspannung zu versorgen.

Vorzugsweise können die Gruppe roter Leuchtdioden und die Gruppe gelber Leuchtdioden elektrisch in Reihe zueinander geschaltet sein. Dadurch wird ein besonders einfacher Schaltungsaufbau ermöglicht.

Wie oben bereits erläutert, ist das Hintergrundelement des Betätigungselements für das Not-Befehlsgerät nicht sicherheitsrelevant, so dass es in der Signalfarbe Gelb blinken darf. Die Konsequenz hieraus ist, dass die rote Beleuchtung des manuell auslösbaren Betätigungselements, die durch die roten Leuchtdioden der Leuchteinrichtung realisiert ist, sicher sein muss, wenn das Not-Befehlsgerät an eine gefahrbringende Maschine oder technische Anlage angeschlossen ist und betriebsbereit ist. Das bedeutet, dass die an eine mit dem Not-Befehlsgerät ausgerüstete Sicherheitseinrichtung angeschlossene Maschine beziehungsweise technische Anlage bei einem Ausfall der roten Beleuchtung des Betätigungselements automatisch zu einem Not-Halt gezwungen werden muss, da das Betätigungselement nicht mehr in der Signalfarbe Rot leuchtet, obwohl es laut Norm sichtbar sein sollte und somit leuchten müsste.

Um dieses zu erreichen, wird in einer bevorzugten Ausführungsform vorgeschlagen, dass das Not-Befehlsgerät eine erste Diagnoseeinrichtung umfasst, die einen elektronischen Schalter aufweist, der in mindestens einem der beiden elektrischen Schaltpfade angeordnet ist, wobei die erste Diagnoseeinrichtung mittels einer Messleitung an die Leuchteinrichtung angeschlossen und dazu eingerichtet ist, eine Ist-Betriebsspannung der roten Leuchtdioden der Leuchteinrichtung zu erfassen und bei einer Abweichung der Ist-Betriebsspannung von einer Soll-Betriebsspannung den elektronischen Schalter zu öffnen. Dieses Öffnen des elektronischen Schalters der ersten Diagnoseeinrichtung kann von der Steuerungs- und Auswerteeinheit erfasst werden, so dass sie die Maschine oder technische Anlage mittels mindestens eines Stellglieds in einen gefahrlosen Betriebszustand überführen kann.

In einer besonders bevorzugten Ausführungsform besteht die Möglichkeit, dass die erste Diagnoseeinrichtung ein Komparatormittel, insbesondere ein Fensterkomparatormittel umfasst, das an die Messleitung und an den elektronischen Schalter angeschlossen ist, und dazu eingerichtet ist, die Ist-Betriebsspannung der roten Leuchtdioden der Leuchteinrichtung zu erfassen und bei einer Abweichung der Ist-Betriebsspannung von der Soll-Betriebsspannung einen elektronischen Schalter zu öffnen.

Grundsätzlich kann auch der Fall eintreten, dass die geregelte Stromquelle, mit der die Leuchteinheit betrieben wird, nicht mit einer ausreichenden Spannung versorgt wird. Um diesen Zustand ebenfalls erfassen zu können, wird daher in einer bevorzugten Weiterbildung vorgeschlagen, dass das Not-Befehlsgerät eine zweite Diagnoseeinrichtung umfasst, die einen elektronischen Schalter aufweist, der in mindestens einem der beiden elektrischen Schaltpfade angeordnet ist, wobei die zweite Diagnoseeinrichtung dazu eingerichtet ist, über eine Messleitung die elektrische Versorgungsspannung der Leuchteinrichtung zu erfassen und bei einer Abweichung der Ist-Versorgungsspannung von einer Soll-Versorgungsspannung den elektronischen Schalter zu öffnen. Dieses Öffnen des elektronischen Schalters der zweiten Diagnoseeinrichtung kann wiederum von der Steuerungs- und Auswerteeinheit erfasst werden, so dass sie die Maschine oder technische Anlage mittels mindestens eines Stellglieds in einen gefahrlosen Betriebszustand überführen kann.

In einer bevorzugten Ausführungsform besteht die Möglichkeit, dass das Not-Befehlsgerät einen elektronischen Schalter aufweist, welcher der Blinkschaltungseinrichtung zugeordnet ist und an die Leuchteinrichtung angeschlossen ist, so dass mittels des elektronischen Schalters und der Blinkschaltungseinrichtung das Blinken der gelben Leuchtdioden der Leuchteinrichtung aktiviert werden kann.

In einer besonders vorteilhaften Ausführungsform wird vorgeschlagen, dass das Betätigungselement und das Hintergrundelement aus einem semitransparenten, in einem unbeleuchteten Zustand vorzugsweise grau erscheinenden Kunststoff hergestellt sind. Die Verwendung eines semitransparenten Kunststoffes zur Herstellung des Betätigungselements und des Hintergrundelements hat den Vorteil, dass das Not-Befehlsgerät in einem deaktivierten Zustand, in dem es zum Beispiel nicht an eine gefahrbringende Maschine oder technische Anlage angeschlossen ist, nicht als solches erkannt werden kann, da das Betätigungselement und das Hintergrundelement nicht in den vorgeschriebenen Signalfarben Rot und Gelb erscheinen. Das Betätigungselement und das Hintergrundelement sind semitransparent, so dass sie Licht hindurchlassen, aber ohne das durchscheinende Licht grau (insbesondere rauchglasfarbig) erscheinen. Dadurch, dass das Betätigungselement und das Hintergrundelement im deaktivierten Zustand vorzugsweise in der neutralen Farbe Grau erscheinen, kann verhindert werden, dass ein Benutzer das Not-Befehlsgerät vermeintlich für aktiviert hält und dieses versehentlich an Stelle eines anderen, tatsächlich aktivierten Not-Befehlsgeräts betätigt. Alternativ kann auch vorgesehen sein, dass nur das Betätigungselement aus einem semitransparenten, in einem unbeleuchteten Zustand vorzugsweise grau erscheinenden Kunststoff hergestellt ist und das Hintergrundelement aus einem transparenten, in einem unbeleuchteten Zustand gelb erscheinenden Kunststoff hergestellt ist. Das Betätigungselement und das Hintergrundelement können insbesondere auch aus einem transluzenten Kunststoff hergestellt sein.

Eine erfindungsgemäße Sicherheitseinrichtung zum Überführen einer gefahrbringenden Maschine oder technischen Anlage in einen gefahrlosen Zustand zeichnet sich dadurch aus, dass das Not-Befehlsgerät nach einem der Ansprüche 1 bis 9 ausgeführt ist. Die Steuerungs- und Auswerteeinheit ist insbesondere so ausgebildet, dass sie die elektrische Spannung an den beiden Sicherheitsausgängen des Not-Befehlsgeräts erfassen kann. Beispielsweise kann die Steuerungs- und Auswerteeinheit zwei Komparatormittel umfassen. Ein erstes Komparatormittel kann dabei die Eingangsspannung am ersten Sicherheitseingang mit der Ausgangsspannung am ersten Sicherheitsausgang vergleichen. Ein zweites Komparatormittel kann die Eingangsspannung am zweiten Sicherheitseingang mit der Ausgangsspannung am zweiten Sicherheitsausgang vergleichen. Wenn zumindest einer der elektrischen Schaltpfade zum Beispiel nach dem Auslösen des Betätigungselements oder durch den elektronischen Schalter zumindest einer der optional vorgesehenen Diagnoseeinrichtungen geöffnet wurde, stellt sich zwischen der Eingangsspannung an zumindest einem der beiden Sicherheitseingänge und der Ausgangspannung an zumindest einem der beiden Sicherheitsausgänge eine Spannungsdifferenz ein, die von den Komparatormitteln der Steuerungs- und Auswerteeinheit erfasst werden kann. Auf diese Weise kann das manuelle Auslösen des Betätigungselements oder das Öffnen des elektronischen Schalters zumindest einer der beiden Diagnoseeinrichtungen des Not-Befehlsgeräts erfasst werden. Wenn das manuelle Auslösen des Betätigungselements oder das Öffnen des elektronischen Schalters zumindest einer der Diagnoseeinrichtungen von der Steuerungs- und Auswerteeinheit erfasst wurde, wird das mindestens eine Stellglied von der Steuerungs- und Auswerteeinheit aktiviert und überführt die Maschine beziehungsweise technische Anlage in den gefahrlosen Betriebszustand (Not-Halt-Zustand).

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine schaubildliche, stark vereinfachte Darstellung, die die grundlegende Funktionsweise eines Not-Befehlsgeräts, das gemäß einem bevorzugten Ausführungsbeispiel der vorliegenden Erfindung ausgeführt ist, veranschaulicht,
- Fig. 2: ein Blockschaltbild einer Sicherheitseinrichtung mit einem Not-Befehlsgerät, das eine Weiterentwicklung des Not-Befehlsgeräts gemäß Fig. 1 ist, veranschaulicht.

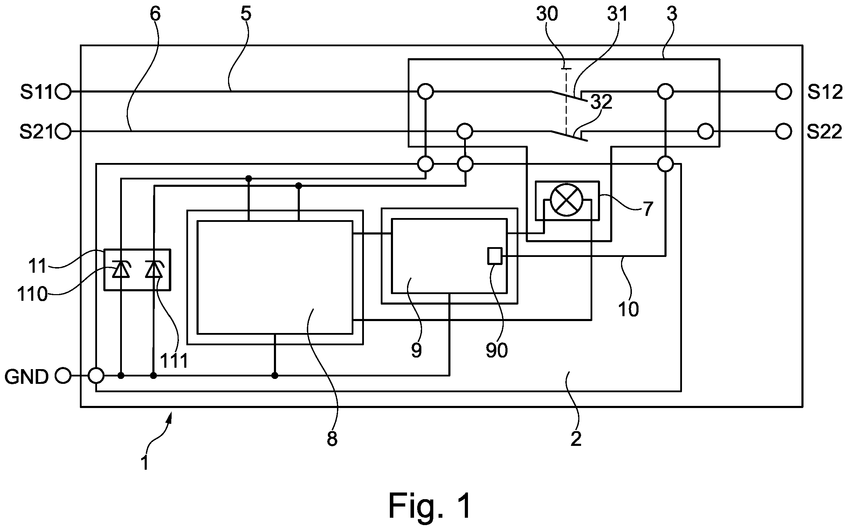

Nachfolgend soll unter Bezugnahme auf Fig. 1 zunächst die grundlegende Funktionsweise eines Not-Befehlsgeräts 1, das gemäß einem bevorzugten Ausführungsbeispiel der Erfindung ausgeführt ist und vorliegend ein Not-Halt-Befehlsgerät zur Auslösung einer Not-Halt-Funktion einer gefahrbringenden Maschine oder technischen Anlage ist, erläutert werden.

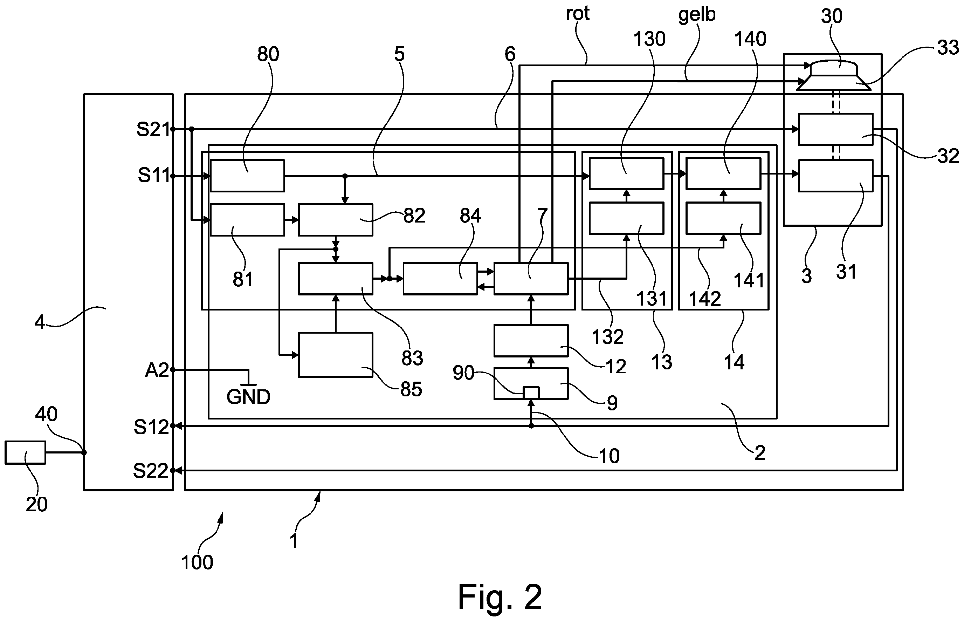

Das Not-Befehlsgerät 1 weist eine Schaltungsanordnung 2 sowie eine Not-Betätigungseinheit 3, die an die Schaltungsanordnung 2 angeschlossen ist, auf. Die Schaltungsanordnung 2 umfasst zwei Sicherheitseingänge S11, S21, die an eine Steuerungs- und Auswerteeinheit 4 (vgl. hierzu Fig. 2) anschließbar sind und einen Eingangskreis bilden, sowie zwei Sicherheitsausgänge S12, S22, die ebenfalls an die Steuerungs- und Auswerteeinheit 4 anschließbar sind und einen Ausgangskreis bilden. Die Steuerungs- und Auswerteeinheit 4 und das Not-Befehlsgerät 1 bilden zusammen eine Sicherheitseinrichtung 100 (vgl. Fig. 2) zum Überführen einer gefahrbringenden Maschine oder technischen Anlage in einen gefahrlosen Zustand.

Zwischen dem ersten Sicherheitseingang S11 und dem ersten Sicherheitsausgang S12 erstreckt sich ein erster elektrischer Schaltpfad 5. Ferner erstreckt sich zwischen dem zweiten Sicherheitseingang S21 und dem zweiten Sicherheitsausgang S22 ein zweiter elektrischer Schaltpfad 6.

Die Not-Betätigungseinheit 3 weist ein manuell auslösbares Betätigungselement 30 auf, das mit zwei mechanischen zwangsöffnenden Schaltermitteln 31, 32, die insbesondere als Taster ausgeführt sein können, verbunden ist, wobei ein erstes Schaltermittel 31 im ersten elektrischen Schaltpfad 5 angeordnet ist und ein zweites Schaltermittel 32 im zweiten elektrischen Schaltpfad 6 angeordnet ist. In der geschlossenen Stellung der beiden Schaltermittel 31, 32 besteht somit eine durchgängige elektrische Verbindung zwischen dem ersten Sicherheitseingang S11 und dem ersten Sicherheitsausgang S12 einerseits sowie zwischen dem zweiten Sicherheitseingang S21 und dem zweiten Sicherheitsausgang S22 andererseits. Da die Schaltungsanordnung 2 jeweils zwei Sicherheitseingänge S11, S21, zwei Sicherheitsausgänge S12, S22 sowie zwei elektrische Schaltpfade 5, 6 aufweist, wird die unter Sicherheitsaspekten geforderte Redundanz geschaffen.

Das Not-Befehlsgerät 1 kann in vorteilhafter Weise mittels einer fünfadrigen Zuleitung mit entsprechenden Anschlusssteckern an die Steuerungs- und Auswerteeinheit 4 angeschlossen werden. Dabei sind zwei Adern den beiden Sicherheitseingängen S11, S21, zwei Adern den beiden Sicherheitsausgängen S12, S22 und eine Ader der Masse GND zugeordnet. Die Steuerungs- und Auswerteeinheit 4 ist so ausgebildet, dass sie die beiden Sicherheitseingänge S11, S21 mit einer elektrischen Eingangsspannung versorgen kann. Dieses hat den Vorteil, dass keine zusätzliche Spannungsversorgungseinrichtung für den Betrieb des Not-Befehlsgeräts 1 erforderlich ist. Dann müsste für den elektrischen Anschluss des Not-Befehlsgeräts 1 eine sechsadrige Zuleitung verwendet werden, die im Gegensatz zu der hier verwendeten fünfadrigen Zuleitung jedoch kein Industriestandard ist. Während des Betriebs des Not-Befehlsgeräts 1 liegt an den beiden Sicherheitseingängen S11, S21 vorzugsweise dieselbe Eingangsspannung (High-Pegel-Spannung) an, die zum Beispiel 24 V betragen kann.

Einschlägige Normen erfordern, dass sich das Not-Befehlsgerät 1 optisch derart von seiner Umgebung abhebt, dass es im Notfall rasch als solches erkannt werden kann. Das manuell auslösbare Betätigungselement 30, das in Fig. 2 im Detail zu erkennen ist, muss in der Signalfarbe Rot erscheinen. Demgegenüber muss ein Hintergrundelement (Kontrastelement) 33 des Betätigungselements 30, das zum Beispiel durch ein Ringelement, das sich um das Betätigungselement 30 herum erstreckt, gebildet sein kann, in der Signalfarbe Gelb erscheinen. Vorliegend sind das Betätigungselement 30 und das Hintergrundelement 33 aus einem semitransparenten, in einem unbeleuchteten Zustand grau erscheinenden Kunststoff hergestellt. Die Verwendung dieses semitransparenten Kunststoffes zur Herstellung des Betätigungselements 30 und des Hintergrundelements 33 hat den Vorteil, dass das Not-Befehlsgerät 1 in einem deaktivierten Zustand, in dem es zum Beispiel nicht an eine gefahrbringende Maschine oder technische Anlage angeschlossen ist, nicht als solches erkannt werden kann, da es nicht in den Signalfarben Rot und Gelb erscheint. Dadurch, dass das Betätigungselement 30 und das Hintergrundelement 33 im deaktivierten Zustand in der neutralen Farbe Grau erscheinen, kann verhindert werden, dass ein Benutzer das Not-Befehlsgerät 1 vermeintlich für aktiviert hält und dieses versehentlich an Stelle eines anderen, tatsächlich aktivierten Not-Befehlsgeräts 1 betätigt.

Um eine Beleuchtung des Not-Befehlsgeräts 1 in den geforderten Signalfarben Rot für das Betätigungselement 30 und Gelb für das Hintergrundelement 33 zu realisieren, weist das Not-Befehlsgerät 1 eine Leuchteinrichtung 7 auf, die in die Not-Betätigungseinheit 3 integriert ist und eine erste Gruppe mit einer Anzahl roter Leuchtdioden und eine zweite Gruppe mit einer Anzahl gelber Leuchtdioden umfasst. Die beiden Gruppen roter beziehungsweise gelber Leuchtdioden sind vorzugsweise elektrisch in Reihe zueinander geschaltet und können insbesondere als Leuchtdiodenstreifen oder alternativ auch als Leuchtdioden-Arrays ausgebildet sein. Die roten beziehungsweise gelben Leuchtdioden der Leuchteinrichtung 7 sind so angeordnet, dass die roten Leuchtdioden das Betätigungselement 30 hinterleuchten können, so dass dieses optisch in der geforderten Signalfarbe Rot erscheint, und die gelben Leuchtdioden das Hintergrundelement 33 hinterleuchten können, so dass dieses optisch in der geforderten Signalfarbe Gelb erscheint.

Um die gelben und roten Leuchtdioden der Leuchteinrichtung 7 mit einem elektrischen Strom versorgen zu können, weist die Schaltungsanordnung 2 eine Stromversorgungseinrichtung 8 auf, die zum Beispiel als Schaltnetzteil mit integrierter Stromregelung ausgebildet sein kann. Einzelheiten einer möglichen Ausgestaltung der Stromversorgungseinrichtung 8 ergeben sich aus Fig. 2. Die Stromversorgungseinrichtung 8 ist eingangsseitig mit dem ersten elektrischen Schaltpfad 5, der an den ersten Sicherheitseingang S11 angeschlossen ist, und mit dem zweiten elektrischen Schaltpfad 6, der an den zweiten Sicherheitseingang S21 angeschlossen ist, verbunden, so dass eine redundante Spannungsversorgung der Stromversorgungseinrichtung 8 mit der Eingangsspannung, die an den beiden Sicherheitseingängen S11, S21 anliegt, realisiert werden kann. Ausgangsseitig ist die Stromversorgungseinrichtung 8 mit der Leuchteinrichtung 7 und mit einer Blinkschaltungseinrichtung 9 verbunden, die ihrerseits ebenfalls an die Leuchteinrichtung 7 angeschlossen ist und deren Funktion weiter unten noch näher erläutert werden soll.

Die Blinkschaltungseinrichtung 9 weist ein Komparatormittel 90 auf und ist über eine Messleitung 10 elektrisch mit dem ersten Sicherheitsausgang S12 verbunden, so dass die elektrische Ausgangsspannung am ersten Sicherheitsausgang S12 erfasst und mit einem voreingestellten oder voreinstellbaren Sollwert verglichen werden kann. Ferner ist in Fig. 1 eine Überspannungsschutzeinrichtung 11 dargestellt, die vorliegend eine erste Z-Diode 110, die an den ersten elektrischen Schaltpfad 5 und an Masse GND angeschlossen ist, sowie eine zweite Z-Diode 111, die an den zweiten elektrischen Schaltpfad 6 und an Masse GND angeschlossen ist, umfasst. Die Stromversorgungseinrichtung 8 und die Blinkschaltungseinrichtung 9 weisen ihrerseits ebenfalls eine Masseverbindung auf.

In einem störungsfreien Betrieb der mit dem aktivierten Not-Befehlsgerät 1 ausgestatteten gefahrbringenden Maschine oder technischen Anlage, sind beide Schaltermittel 31, 32 der Not-Betätigungseinheit 3 in einer Schließstellung, so dass die Ausgangsspannung an den beiden Sicherheitsausgängen S12, S22 jeweils der Eingangsspannung an den Sicherheitseingängen S11, S21 entspricht. Wenn die am ersten Sicherheitseingang S21 anliegende Spannung zum Beispiel 24 V beträgt, erfasst das Komparatormittel 90, das in diesem Ausführungsbeispiel in die Blinkschaltungseinrichtung 9 integriert ist, am ersten Sicherheitsausgang S12 ebenfalls eine elektrische Ausgangsspannung in Höhe der Eingangsspannung (zum Beispiel 24 V). Die gelben und roten Leuchtdioden der Leuchteinrichtung 7 werden von der Stromversorgungseinrichtung 8 mit einem konstanten elektrischen Betriebsstrom versorgt, so dass sie permanent leuchten. Das Betätigungselement 30 wird dabei rot hinterleuchtet und das Hintergrundelement 33 wird gelb hinterleuchtet, so dass das Not-Befehlsgerät 1 die einschlägigen Normen in Bezug auf die geforderten Signalfarben des Betätigungselements 30 und des Hintergrundelements 33 erfüllt. Da das Betätigungselement 30 und das Hintergrundelement 33 in den vorgeschriebenen Signalfarben Rot beziehungsweise Gelb leuchten, kann ferner erkannt werden, dass das Not-Befehlsgerät 1 tatsächlich aktiviert und damit betriebsbereit ist, so dass es als solches erkannt werden kann.

Wenn beim Auftreten einer Gefahrensituation das Betätigungselement 30 vom Bedienpersonal manuell ausgelöst wird, werden die beiden zwangsöffnenden Schaltermittel 31, 32, insbesondere Taster, der Not-Betätigungseinheit 3 geöffnet, so dass es zu einer Spannungsdifferenz zwischen den Eingangsspannungen an den beiden Sicherheitseingängen S11, S21 und den Ausgangsspannungen an den beiden Sicherheitsausgängen S12, S22 kommt. Die Ausgangsspannungen an den Sicherheitsausgängen S12, S22 sind geringer als die Eingangsspannungen an den beiden Sicherheitseingängen S11, S21. Die Ausgangsspannungen an den Sicherheitsausgängen S12, S22 können nach dem Öffnen der Schaltermittel 31, 32 insbesondere 0 V betragen, sofern die Sicherheitsausgänge S12, S22 potentialfrei ausgeführt sein sollten. Die potentialfreie Ausführung der beiden Sicherheitsausgänge S12, S22 ist allerdings nicht zwingend erforderlich.

Die Blinkschaltungseinrichtung 9 ist so ausgebildet, dass bei einem von dem Komparatormittel 90 erfassten Absinken der Ausgangsspannung am ersten Sicherheitsausgang S12 unter den voreingestellten oder voreinstellbaren Schwellwert die gelben Leuchtdioden der Leuchteinrichtung 7 derart angesteuert werden, dass sie nicht mehr konstant leuchten, sondern periodisch oder alternativ auch nicht-periodisch blinken. Beispielsweise können die gelben Leuchtdioden mit Hilfe eines elektronischen Schalters, insbesondere mittels eines Transistors, überbrückt werden, welcher von der Blinkschaltungseinrichtung 9 angesteuert wird. Dadurch kann die Blinkschaltungseinrichtung 9 das Blinken der gelben Leuchtdioden der Leuchteinrichtung 7 steuern. Der Schwellwert der Ausgangsspannung am ersten Sicherheitsausgang S12, bei deren Unterschreiten die Blinkschaltungseinrichtung 9 das Blinken der gelben Leuchtdioden der Leuchteinrichtung 7 aktiviert, kann zum Beispiel auf 50 % bis 75 % des Betrags der Eingangsspannung am ersten Sicherheitseingang S11 gesetzt sein. Durch das Blinken der gelben Leuchtdioden der Leuchteinrichtung 7, die das Hintergrundelement 33 hinterleuchten, ist es auf einfache Weise möglich, das manuelle Auslösen des Betätigungselements 30, welches die Schaltermittel 31, 32 und damit auch die beiden elektrischen Schaltpfade 5, 6 öffnet, optisch zu signalisieren. Da das im störungsfreien Betrieb permanent gelb hinterleuchtete Hintergrundelement 33 gemäß den einschlägigen Normen nicht sicherheitsrelevant ist, ist es zulässig, dass die gelben Leuchtdioden der Leuchteinrichtung 7 nach dem manuellen Auslösen des Betätigungselements 30 blinken.

Die Steuerungs- und Auswerteeinheit 4, die in Fig. 2 gezeigt ist und auch mit dem in Fig. 1 dargestellten Not-Befehlsgerät verwendet werden kann, ist so ausgebildet, dass sie die elektrische Spannung an den beiden Sicherheitsausgängen S12, S22 erfassen kann. Beispielsweise kann die Steuerungs- und Auswerteeinheit 4 ihrerseits zwei Komparatormittel umfassen. Ein erstes Komparatormittel kann dabei die Eingangsspannung am ersten Sicherheitseingang S11 mit der Ausgangsspannung am ersten Sicherheitsausgang S12 vergleichen. Ein zweites Komparatormittel kann die Eingangsspannung am zweiten Sicherheitseingang S21 mit der Ausgangsspannung am zweiten Sicherheitsausgang S22 vergleichen. Wenn die elektrischen Schaltpfade 5, 6 nach dem Auslösen des Betätigungselements 30 geöffnet werden, stellt sich zwischen den Eingangsspannungen an den beiden Sicherheitseingängen S11, S21 und den Ausgangspannungen an den beiden Sicherheitsausgängen S12, S22 eine Spannungsdifferenz ein, die von den Komparatormitteln der Steuerungs- und Auswerteeinheit 4 erfasst wird. Auf diese Weise kann das Auslösen des Betätigungselements 30 des Not-Befehlsgeräts 1 erfasst werden. Die Steuerungs- und Auswerteeinheit 4 weist einen Sicherheitsausgang 40 (vgl. Fig. 2) auf, an den zumindest ein Stellglied 20 angeschlossen ist, welches an die gefahrbringende Maschine oder technische Anlage angeschlossen ist und dazu eingerichtet ist, die Maschine beziehungsweise technische Anlage in einen für Menschen gefahrlosen Betriebszustand (Not-Halt-Zustand) zu überführen. Wenn das Auslösen des Betätigungselements 30 von der Steuerungs- und Auswerteeinheit 4 erfasst wurde, wird das Stellglied 20 aktiviert und überführt die Maschine beziehungsweise technische Anlage in den gefahrlosen Betriebszustand.

Ein wesentlicher Vorteil des vorstehend erläuterten Not-Befehlsgeräts 1 besteht darin, dass es selbsttätig erkennen kann, wenn das Betätigungselement 30 der Not-Betätigungseinheit 3 gedrückt worden ist. Nach dem manuellen Auslösen des Betätigungselements 30 wird die in das Not-Befehlsgerät 1 integrierte Blinkschaltungseinrichtung 9 aktiviert, so dass die gelben Leuchtdioden der Leuchteinrichtung 7 blinken und so das Auslösen des Betätigungselements 30 optisch visualisieren können. Bei den aus dem Stand der Technik bekannten Not-Befehlsgeräten musste das Auslösen des Betätigungselements 30 auf kompliziertem Wege von der Steuerungs- und Auswerteeinheit 4 erfasst werden, um zum Beispiel festzustellen, welches Not-Befehlsgerät 1 ausgelöst wurde. Vorliegend wird dieses umständliche Verfahren massiv abgekürzt, da das Komparatormittel 90 der Blinkschaltungseinrichtung 9 über die Messleitung 10 hinter einem der beiden Schaltermittel 31, 32 den Zustand des Schaltermittels 31, 32 erfassen kann und die Blinkschaltungseinrichtung 9 das Blinken der gelben Leuchtdioden der Leuchteinheit 7 aktivieren kann.

Grundsätzlich wäre es auch denkbar, dass die Blinkschaltungseinrichtung 9 nach dem Auslösen des Betätigungselements 30 und Öffnen der beiden Schaltermittel 31, 32 das Blinken der roten Leuchtdioden der Leuchteinrichtung 7 aktiviert. Dieses ist jedoch zumindest derzeit (noch) nicht zulässig, da die einschlägigen Normen fordern, dass das Betätigungselement 30 permanent in der Signalfarbe Rot leuchten muss. Das Blinken der roten Leuchtdioden der Leuchteinrichtung 7 hätte demgegenüber zur Folge, dass das Betätigungselement 30 nicht permanent leuchtet, sondern dessen Beleuchtung periodisch oder nicht-periodisch einbeziehungsweise ausgeschaltet wird.

Wie oben bereits erwähnt, ist das Hintergrundelement 33 nicht sicherheitsrelevant, so dass es in der Signalfarbe Gelb blinken darf. Die Konsequenz hieraus ist, dass die rote Beleuchtung des manuell auslösbaren Betätigungselements 30, die durch die roten Leuchtdioden der Leuchteinrichtung 7 realisiert ist, sicher sein muss, wenn das Not-Befehlsgerät 1 an eine gefahrbringende Maschine oder technische Anlage angeschlossen ist und betriebsbereit ist. Das bedeutet, dass die an die mit dem Not-Befehlsgerät 1 ausgestattete Sicherheitseinrichtung 100 angeschlossene Maschine beziehungsweise technische Anlage bei einem Ausfall der roten Beleuchtung des Betätigungselements 30 automatisch zu einem Not-Halt gezwungen werden muss, da das Betätigungselement 30 nicht mehr in der Signalfarbe Rot leuchtet, obwohl es laut Norm sichtbar sein sollte und somit leuchten müsste. Um dieses zu erreichen, müssen somit geeignete Maßnahmen getroffen werden, um den sicheren Betrieb der roten Leuchtdioden der Leuchteinrichtung 7 zu überwachen.

Unter Bezugnahme auf Fig. 2 soll nachfolgend eine Sicherheitseinrichtung 100 mit einer Steuerungs- und Auswerteeinheit 4 und einem Not-Befehlsgerät 1 näher erläutert werden, welches eine Weiterentwicklung des ersten Ausführungsbeispiels darstellt und auf diesem aufbaut. Die nachfolgend beschriebenen schaltungstechnischen Details des Not-Befehlsgeräts 1 können einzeln oder in Kombination auch im ersten Ausführungsbeispiel des Not-Befehlsgeräts 1 implementiert sein.

Die grundlegende Sicherheitsfunktion, die in der oben beschriebenen Weise das Auslösen des Betätigungselements 30 durch eine Erfassung des Absinkens der Ausgangspannung am ersten Sicherheitsausgang S12 unter einen voreingestellten oder voreinstellbaren Schwellwert erfasst und anschließend das Blinken der gelben Leuchtdioden der Leuchteinrichtung 7 aktiviert, ist in diesem Ausführungsbeispiel ebenfalls in der oben erläuterten Weise implementiert und soll an dieser Stelle nicht erneut im Detail beschrieben werden. Die Leuchteinrichtung 7 ist wiederum in die Not-Betätigungseinheit 3 integriert, wurde aber in Fig. 2 aus Vereinfachungsgründen außerhalb der Not-Betätigungseinheit 3 dargestellt. Die beiden mit "rot" beziehungsweise "gelb" bezeichneten Pfeile sollen symbolisieren, dass die roten Leuchtdioden der Leuchteinrichtung 7 das Betätigungselement 30 in der Signalfarbe Rot und die gelben Leuchtdioden das Hintergrundelement 33 in der Signalfarbe Gelb hinterleuchten können.

Die Stromversorgungseinrichtung 8, die in Fig. 1 stark vereinfacht als Funktionsblock dargestellt wurde, umfasst eine erste Überstrom- und Überspannungsschutzeinrichtung 80, die an den ersten Sicherheitseingang S11 angeschlossen ist, sowie eine zweite Überstrom- und Überspannungsschutzeinrichtung 81, die an den zweiten Sicherheitseingang S21 angeschlossen ist. Die beiden Überstrom- und Überspannungsschutzeinrichtungen 80, 81 sind so ausgeführt, dass sie einen Schutz (realisiert durch kleine Schmelzsicherungen) vor Strömen, die zum Beispiel größer als 0,5 A sein können, und einen Schutz (realisiert durch Transildioden) vor Hochspannungstransienten, die zum Beispiel bis zu 2 kV erreichen können, zur Verfügung stellen. Diese Transildioden reduzieren Hochspannungsspitzen, die zum Beispiel aus Schaltvorgängen herrühren können, auf Spannungswerte bis zu etwa 80 V. Somit können die beiden Überstrom- und Überspannungsschutzeinrichtungen 80, 81 verhindern, dass bei einem Auftreten eines Überstroms oder einer Überspannung elektrische beziehungsweise elektronische Bauteilkomponenten der Schaltungsanordnung 2 beschädigt werden.

Die Stromversorgungseinrichtung 8 umfasst ferner eine Versorgungsschaltung 82, die eingangsseitig an die beiden Überstrom- und Überspannungsschutzeinrichtungen 80, 81 und ausgangsseitig an einen elektronischen Schalter 83, insbesondere einen Transistor, angeschlossen ist. Der elektronische Schalter 83 ist ausgangsseitig an eine geregelte Stromquelle 84 angeschlossen, die die gelben und roten Leuchtdioden der Leuchteinheit 7 mit einem konstanten Betriebsstrom versorgen kann, wenn der elektronische Schalter 83 geschlossen ist und die geregelte Stromquelle 84 von der Versorgungsschaltung 82 mit einer elektrischen Versorgungsspannung (zum Beispiel 24 V) versorgt wird.

Die Stromversorgungseinrichtung 8 weist ferner eine zusätzliche Überspannungsschutzeinrichtung 85 auf, die insbesondere elektronisch realisiert sein kann. Diese Überspannungsschutzeinrichtung 85 misst die Spannung hinter der Versorgungsschaltung 82 und unterbricht den elektrischen Stromfluss zur geregelten Stromquelle 84 durch Öffnen des elektronischen Schalters 83 bei einer Spannung, die größer als etwa 32 V ist. Die geregelte Stromquelle 84 könnte eigentlich mit Spannungen bis etwa 90 V betrieben werden. Allerdings sind in diesem Zweig der Schaltungsanordnung 2 noch die Komponenten der Blinkschaltungseinrichtung 9 sowie zweier Diagnoseeinrichtungen 13, 14 vorhanden, die vorliegend nur für Spannungen bis maximal 36 V ausgelegt sind.

Die Blinkschaltungseinrichtung 9 ist so ausgebildet, dass sie einen elektronischen Schalter 12, insbesondere Transistor, der zwischen der Blinkschaltungseinrichtung 9 und der Leuchteinrichtung 7 angeordnet ist, ansteuern kann, wenn die Spannung am ersten Sicherheitsausgang S12 den voreingestellten beziehungsweise voreinstellbaren Schwellwert unterschreitet und dieses von dem Komparatormittel 90 der Blinkschaltungseinrichtung 9 erfasst wird. Dabei können die gelben Leuchtdioden, die mit den roten Leuchtdioden der Leuchteinrichtung 7 elektrisch in Reihe geschaltet sind, überbrückt werden, so dass mittels der Blinkschaltungseinrichtung 9 das Blinken der gelben Leuchtdioden der Leuchteinrichtung 7 aktiviert werden kann.

Die Schaltungsanordnung 2 weist eine erste Diagnoseeinrichtung 13 und eine zweite Diagnoseeinrichtung 14 auf, deren Funktion nachfolgend näher erläutert werden soll. Jede der beiden Diagnoseeinrichtungen 13, 14 umfasst einen elektronischen Schalter 130, 140 sowie ein daran angeschlossenes Komparatormittel 131, 141, insbesondere ein Fensterkomparatormittel. Der elektronische Schalter 130 der ersten Diagnoseeinrichtung 13, der insbesondere ein Transistor sein kann, ist zwischen dem ersten Sicherheitseingang S11 und dem elektronischen Schalter 140 der zweiten Diagnoseeinrichtung 14, der ebenfalls ein Transistor sein kann, angeordnet. Der elektronische Schalter 140 der zweiten Diagnoseeinrichtung 14 ist zwischen dem elektronischen Schalter 130 der ersten Diagnoseeinrichtung 13 und dem Schaltermittel 30 des ersten elektrischen Schaltpfads 5 angeordnet.

An einer Übergangsstelle zwischen den gelben Leuchtdioden und den damit in Reihe geschalteten roten Leuchtdioden der Leuchteinrichtung 7 ist ein Messabgriff für die erste Diagnoseeinrichtung 13 vorgesehen. Über eine Messleitung 132 kann das Komparatormittel 131 ermitteln, ob die elektrische Spannung, die an der Gruppe der roten Leuchtdioden der Leuchteinrichtung 7 anliegt, einem vorgegebenen Spannungssollwert entspricht. Ist dieses in Folge einer Funktionsstörung nicht der Fall, öffnet das Komparatormittel 131 den elektronischen Schalter 130. Abweichungen vom Spannungssollwert können zum Beispiel bei einem oder mehreren elektrischen Kurzschlüssen zwischen den roten Leuchtdioden der Leuchteinrichtung 7 auftreten.

Da die Ausgangsspannung am ersten Sicherheitsausgang S12 den Schwellwert unterschreitet, wird das an die Steuerungs- und Auswerteeinheit 4 angeschlossene Stellglied 20 aktiviert, so dass ein Not-Halt der gefahrbringenden Maschine oder technischen Anlage eingeleitet werden kann. Da die Blinkschaltungseinrichtung 9 das Absinken der elektrischen Spannung am ersten Sicherheitsausgang S12 ebenfalls erfasst, kann mittels des elektronischen Schalters 12, welcher der Blinkschaltungseinrichtung 9 zugeordnet ist, und mit der Blinkschaltungseinrichtung 9 das Blinken der gelben Leuchtdioden der Leuchteinrichtung 7 aktiviert werden. Dieses setzt natürlich voraus, dass die gelben Leuchtdioden der Leuchteinrichtung 7 von der geregelten Stromquelle 84 überhaupt noch mit Strom versorgt werden können. Ist dieses nicht mehr der Fall, können die gelben Leuchtdioden der Leuchteinrichtung 7 weder leuchten noch blinken.

Zwischen dem hinter der Versorgungsschaltung 82 angeordneten elektronischen Schalter 83 und der geregelten Stromquelle 84 ist ein weiterer Messabgriff vorgesehen, der über eine Messleitung 142 mit dem Komparatormittel 141 der zweiten Diagnoseeinrichtung 14 verbunden ist. Das Komparatormittel 141 der zweiten Diagnoseeinrichtung 14 testet, ob die geregelte Stromquelle 84 von der Versorgungsschaltung 82 mit einer ausreichenden elektrischen Spannung versorgt wird, um überhaupt korrekt arbeiten zu können. Ist dieses in Folge einer Funktionsstörung nicht der Fall, öffnet das Komparatormittel 141 den elektronischen Schalter 140 der zweiten Diagnoseeinrichtung 14 im ersten elektrischen Schaltpfad 5. Da die Spannung am ersten Sicherheitsausgang S12 folglich den Schwellwert unterschreitet, wird das an die Steuerungs- und Auswerteeinheit 4 angeschlossene Stellglied 20 aktiviert, so dass ein Not-Halt der gefahrbringenden Maschine oder technischen Anlage eingeleitet werden kann. Die Blinkschaltungseinrichtung 9 erfasst ebenfalls das Absinken der elektrischen Spannung am ersten Sicherheitsausgang S12. Mittels des elektronischen Schalters 12, welcher der Blinkschaltungseinrichtung 9 zugeordnet ist, und mit der Blinkschaltungseinrichtung 9 kann wiederum das Blinken der gelben Leuchtdioden der Leuchteinrichtung 7 aktiviert werden. Dieses setzt natürlich wiederum voraus, dass die gelben Leuchtdioden der Leuchteinrichtung 7 von der geregelten Stromquelle 84 noch mit Strom versorgt werden können. Sollte dieses wiederum nicht der Fall sein, können die gelben Leuchtdioden der Leuchteinrichtung 7 weder leuchten noch blinken.

Die beiden Diagnoseeinrichtungen 13, 14 sorgen somit dafür, dass das Leuchten der roten Leuchtdioden der Leuchteinrichtung 7 sicher ist. Sollte es zu einer Funktionsstörung kommen, so dass die roten Leuchtdioden der Leuchteinrichtung 7 nicht mehr ordnungsgemäß leuchten können, wird von der Steuerungs- und Auswerteeinheit 4 das an diese angeschlossene Stellglied 20 aktiviert, so dass automatisch ein Not-Halt der gefahrbringenden Maschine oder technischen Anlage eingeleitet werden kann.

Die in Fig. 2 dargestellte Schaltungsanordnung 2 weist in vorteilhafter Weise eine Schaltungstopologie auf, wie sie in DIN EN ISO 13849-1 (Kapitel 6.2.5) angegeben ist.

## Patentansprüche

1. Not-Befehlsgerät (1), umfassend
- einen ersten und einen zweiten Sicherheitseingang (S11, S21), die an eine Steuerungs- und Auswerteeinheit (4) anschließbar sind und im Betrieb des Not-Befehlsgeräts (1) von der Steuerungs- und Auswerteeinheit (4) mit einer Eingangsspannung versorgt werden können,
- einen ersten und einen zweiten Sicherheitsausgang (S12, S22), die an die Steuerungs- und Auswerteeinheit (4) anschließbar sind,
- einen ersten elektrischen Schaltpfad (5), der sich zwischen dem ersten Sicherheitseingang (S11) und dem ersten Sicherheitsausgang (S12) erstreckt,
- einen zweiten elektrischen Schaltpfad (6), der sich zwischen dem zweiten Sicherheitseingang (S21) und dem zweiten Sicherheitsausgang (S22) erstreckt,
- eine Not-Betätigungseinheit (3), die ein manuell auslösbares Betätigungselement (30), das mit zwei mechanischen zwangsöffnenden Schaltermitteln (31, 32) verbunden ist, und ein Hintergrundelement (33) aufweist, wobei ein erstes Schaltermittel (31) im ersten elektrischen Schaltpfad (5) angeordnet ist und ein zweites Schaltermittel (32) im zweiten elektrischen Schaltpfad (6) angeordnet ist, sowie
- eine Leuchteinheit (7) mit einer Gruppe roter Leuchtdioden, die so angeordnet sind, dass sie das Betätigungselement (30) hinterleuchten können, und mit einer Gruppe gelber Leuchtdioden, die so angeordnet sind, dass sie das Hintergrundelement (33) hinterleuchten können,
- zumindest ein Spannungserfassungsmittel, insbesondere ein Komparatormittel (90), zur Erfassung einer elektrischen Ausgangsspannung an zumindest einem der Sicherheitsausgänge (S12, S22) und
- eine Blinkschaltungseinrichtung (9), **dadurch gekennzeichnet, dass** die Blinkschaltungseinrichtung (9) an das Spannungserfassungsmittel angeschlossen ist oder dieses umfasst, wobei die Blinkschaltungseinrichtung (9) dazu eingerichtet ist, bei einem von dem Spannungserfassungsmittel erfassten Unterschreiten eines voreingestellten oder voreinstellbaren Schwellwertes der Ausgangsspannung ein periodisches oder nicht-periodisches Blinken der gelben Leuchtdioden und/oder der roten Leuchtdioden der Leuchteinrichtung (7) zu aktivieren.

2. Not-Befehlsgerät (1) nach Anspruch 1, **dadurch gekennzeichnet, dass** das Spannungserfassungsmittel mittels einer Messleitung (10) an zumindest einen der beiden Sicherheitsausgänge (S12, S22) angeschlossen ist.

3. Not-Befehlsgerät (1) nach einem der Ansprüche 1 oder 2, **dadurch gekennzeichnet, dass** das Not-Befehlsgerät (1) eine Versorgungschaltung (82), die an die beiden Sicherheitseingänge (S11, S21) angeschlossen ist, und eine geregelte Stromquelle (84) umfasst, die an die Versorgungsschaltung (82) und an die Leuchteinheit (7) angeschlossen ist.

4. Not-Befehlsgerät (1) nach einem der Ansprüche 1 bis 3, **dadurch gekennzeichnet, dass** die Gruppe roter Leuchtdioden und die Gruppe der gelben Leuchtdioden elektrisch in Reihe zueinander geschaltet sind.

5. Not-Befehlsgerät (1) nach einem der Ansprüche 1 bis 4, **dadurch gekennzeichnet, dass** das Not-Befehlsgerät (1) eine erste Diagnoseeinrichtung (13) umfasst, die einen elektronischen Schalter (130) aufweist, der in mindestens einem der beiden elektrischen Schaltpfade (5, 6) angeordnet ist, wobei die erste Diagnoseeinrichtung (13) mittels einer Messleitung (132) an die Leuchteinrichtung (7) angeschlossen und dazu eingerichtet ist, eine Ist-Betriebsspannung der roten Leuchtdioden der Leuchteinrichtung (7) zu erfassen und bei einer Abweichung der Ist-Betriebsspannung von einer Soll-Betriebsspannung den elektronischen Schalter (130) zu öffnen.

6. Not-Befehlsgerät (1) nach Anspruch 5, **dadurch gekennzeichnet, dass** die erste Diagnoseeinrichtung (13) ein Komparatormittel, insbesondere ein Fensterkomparatormittel umfasst, das an die Messleitung (132) und an den elektronischen Schalter (130) angeschlossen ist, und dazu eingerichtet ist, die Ist-Betriebsspannung der roten Leuchtdioden der Leuchteinrichtung (7) zu erfassen und bei einer Abweichung der Ist-Betriebsspannung von der Soll-Betriebsspannung einen elektronischen Schalter (130) zu öffnen.

7. Not-Befehlsgerät (1) nach einem der Ansprüche 1 bis 6, **dadurch gekennzeichnet, dass** das Not-Befehlsgerät (1) eine zweite Diagnoseeinrichtung (14) umfasst, die einen elektronischen Schalter (140) aufweist, der in mindestens einem der beiden elektrischen Schaltpfade (5, 6) angeordnet ist, wobei die zweite Diagnoseeinrichtung (14) dazu eingerichtet ist, über eine Messleitung (142) die elektrische Versorgungsspannung der Leuchteinrichtung (7) zu erfassen und bei einer Abweichung der Ist-Versorgungsspannung von einer Soll-Versorgungsspannung den elektronischen Schalter (140) zu öffnen.

8. Not-Befehlsgerät (1) nach einem der Ansprüche 1 bis 7, **dadurch gekennzeichnet, dass** das Not-Befehlsgerät (1) einen elektronischen Schalter (12) aufweist, welcher der Blinkschaltungseinrichtung (9) zugeordnet ist und an die Leuchteinrichtung (7) angeschlossen ist, so dass mittels des elektronischen Schalters (12) und der Blinkschaltungseinrichtung (9) das Blinken der gelben Leuchtdioden der Leuchteinrichtung (7) aktiviert werden kann.

9. Not-Befehlsgerät (1) nach einem der Ansprüche 1 bis 8, **dadurch gekennzeichnet, dass** das Betätigungselement (30) und das Hintergrundelement (33) aus einem semitransparenten, in einem unbeleuchteten Zustand vorzugsweise grau erscheinenden Kunststoff hergestellt sind.

10. Sicherheitseinrichtung (100) zum Überführen einer gefahrbringenden Maschine oder technischen Anlage in einen gefahrlosen Betriebszustand, umfassend
- eine Steuerungs- und Auswerteeinheit (4), die zumindest einen Sicherheitsausgang (40) aufweist, an den ein Stellglied (20) angeschlossen ist, welches dazu ausgebildet ist, die Maschine oder technische Anlage nach der Aktivierung in den gefahrlosen Betriebszustand zu überführen, sowie
- zumindest ein Not-Befehlsgerät (1), das an die Steuerungs- und Auswerteeinheit (4) angeschlossen ist, **dadurch gekennzeichnet, dass** das Not-Befehlsgerät (1) nach einem der Ansprüche 1 bis 9 ausgeführt ist.

## Claims

1. Emergency command device (1), comprising:
- a first and a second safety input (S11, S21) which are connectable to a control and evaluating unit (4) and can be supplied with an input voltage during operation of the emergency command device (1) from the control and evaluating unit (4),
- a first and a second safety output (S12, S22) which are connectable to the control and evaluating unit (4),
- a first electrical switching path (5) extending between the first safety input (S11) and the first safety output (S12),
- a second electrical switching path (6) extending between the second safety input (S21) and the second safety output (S22),
- an emergency actuating unit (3) having a manually triggerable actuating element (30) connected to two mechanical, positively opening switching means (31, 32), and having a background element (33), wherein a first switching means (31) being disposed in the first electrical switching path (5) and a second switching means (32) being disposed in the second electrical switching path (6), and
- a light-emitting unit (7) having a set of red light-emitting diodes disposed in such a way that they can backlight the actuating element (30), and having a set of yellow light-emitting diodes disposed in such a way that they can backlight the background element (33),
- at least one voltage detection means, in particular a comparator means (90), for detecting an electrical output voltage at at least one of the safety outputs (S12, S22) and
- a flashing circuit apparatus (9), **characterised in that** the flashing circuit apparatus (9) is connected to the voltage detection means or comprises the latter, wherein the flashing circuit apparatus (9) being configured to activate a periodic or non-periodic flashing of the yellow light-emitting diodes and/or the red light-emitting diodes of the light-emitting unit (7) when the voltage detection means detects a drop in the output voltage below a preset or presettable threshold value.

2. Emergency command device (1) according to claim 1, **characterised in that** the voltage detection means is connected by means of a measuring lead (10) to at least one of the two safety outputs (S12, S22).

3. Emergency command device (1) according to any of claims 1 or 2, **characterised in that** the emergency command device (1) comprises a supply circuit (82), which is connected to both safety inputs (S11, S21), and a regulated power source (84) connected to the supply circuit (82) and to the light-emitting unit (7).

4. Emergency command device (1) according to any of claims 1 to 3, **characterised in that** the set of red light-emitting diodes and the set of yellow light-emitting diodes are electrically connected to one another in series.

5. Emergency command device (1) according to any of claims 1 to 4, **characterised in that** the emergency command device (1) comprises a first diagnostic apparatus (13) having an electronic switch (130) disposed in at least one of the two electrical switching paths (5, 6), wherein the first diagnostic apparatus (13) being connected by means of a measuring lead (132) to the light-emitting unit (7) and being configured to detect an actual operating voltage of the red light-emitting diodes of the light-emitting unit (7) and to open the electronic switch (130) when the actual operating voltage deviates from a target operating voltage.

6. Emergency command device (1) according to claim 5, **characterised in that** the first diagnostic apparatus (13) comprises a comparator means, in particular a window comparator means, which is connected to the measuring lead (132) and to the electronic switch (130) and is configured to detect the actual operating voltage of the red light-emitting diodes of the light-emitting unit (7) and to open an electronic switch (130) when the actual operating voltage deviates from the target operating voltage.

7. Emergency command device (1) according to any of claims 1 to 6, **characterised in that** the emergency command device (1) comprises a second diagnostic apparatus (14) having an electronic switch (140) disposed in at least one of the two electrical switching paths (5, 6), wherein the second diagnostic apparatus (14) being configured to detect, via a measuring lead (142), the electrical supply voltage of the light-emitting unit (7) and to open the second electronic switch (140) when the actual supply voltage deviates from a target supply voltage.

8. Emergency command device (1) according to any of claims 1 to 7, **characterised in that** the emergency command device (1) has an electronic switch (12) associated with the flashing circuit apparatus (9) and connected to the light-emitting unit (7), so that the flashing of the yellow light-emitting diodes of the light-emitting unit (7) can be activated by means of the electronic switch (12) and the flashing circuit apparatus (9).

9. Emergency command device (1) according to any of claims 1 to 8, **characterised in that** the actuating element (30) and the background element (33) are manufactured from a semi-transparent plastic that appears grey in an unlit state.

10. Safety apparatus (100) for putting a dangerous machine or industrial plant into a safe operating state, comprising:
- a control and evaluating unit (4), which has at least one safety output (40) to which a control element (20) is connected, the control element being designed to put the machine or industrial plant into the safe operating state after activation, and
- at least one emergency command device (1) connected to the control and evaluating unit (4), **characterised in that** the emergency command device (1) is embodied according to any of claims 1 to 9.

## Revendications

1. Appareil de commande d'urgence (1), comprenant
- une première et une seconde entrée de sécurité (S11, S21), qui sont raccordables à une unité de contrôle et d'évaluation (4) et qui peuvent être alimentées avec une tension d'entrée par l'unité de contrôle et d'évaluation (4) lors du fonctionnement de l'appareil de commande d'urgence (1),
- une première et une seconde sortie de sécurité (S12, S22), qui sont raccordables à l'unité de contrôle et d'évaluation (4),
- un premier chemin de commutation électrique (5), qui s'étend entre la première entrée de sécurité (S11) et la première sortie de sécurité (S12),
- un second chemin de commutation électrique (6), qui s'étend entre la seconde entrée de sécurité (S21) et la seconde sortie de sécurité (S22),
- une unité d'actionnement d'urgence (3), qui comporte un élément d'actionnement (30) déclenchable manuellement, qui est relié à deux moyens commutateurs (31, 32) mécaniques ouvrant de force, et un élément d'arrière-plan (33), un premier élément commutateur (31) étant agencé dans le premier chemin de commutation électrique (5) et un second moyen commutateur (32) étant agencé dans le second chemin de commutation électrique (6), ainsi que
- une unité d'éclairage (7) avec un groupe de diodes luminescentes rouges qui sont agencées de telle manière qu'elles peuvent éclairer par l'arrière l'élément d'actionnement (30) et avec un groupe de diodes luminescentes jaunes qui sont agencées de telle manière qu'elles peuvent éclairer par l'arrière l'élément d'arrière-plan (33),
- au moins un moyen détecteur de tension, en particulier un moyen comparateur (90), en vue de la détection d'une tension de sortie électrique au niveau d'au moins une des sorties de sécurité (S12, S22) et
- un circuit de clignotement (9),
**caractérisé en ce que** le circuit de clignotement (9) est raccordé au moyen détecteur de tension ou comprend celui-ci, lequel circuit de clignotement (9) est conçu pour, lorsque le moyen détecteur de tension détecte que la tension de sortie devient inférieure à une valeur de seuil préréglée ou pouvant être préréglée, activer un clignotement périodique ou non périodique des diodes luminescentes jaunes et/ou des diodes luminescentes rouges du dispositif d'éclairage (7).

2. Appareil de commande d'urgence (1) selon la revendication 1, **caractérisé en ce que** le moyen détecteur de tension est raccordé à au moins une des deux sorties de sécurité (S12, S22) au moyen d'une ligne de mesure (10).

3. Appareil de commande d'urgence (1) selon l'une quelconque des revendications 1 ou 2, **caractérisé en ce que** l'appareil de commande d'urgence (1) comprend un circuit d'alimentation (82), qui est raccordé aux deux entrées de sécurité (S11, S21), et une source de courant régulée (84), qui est raccordée au circuit d'alimentation (82) et à l'unité d'éclairage (7).

4. Appareil de commande d'urgence (1) selon l'une quelconque des revendications 1 à 3, **caractérisé en ce que** le groupe de diodes luminescentes rouges et le groupe des diodes luminescentes jaunes sont branchés électriquement en série l'un avec l'autre.

5. Appareil de commande d'urgence (1) selon l'une quelconque des revendications 1 à 4, **caractérisé en ce que** l'appareil de commande d'urgence (1) comprend un premier dispositif de diagnostic (13) qui comporte un interrupteur électronique (130) qui est agencé dans au moins un des deux chemins de commutation électriques (5, 6), lequel premier dispositif de diagnostic (13) est raccordé au dispositif d'éclairage (7) au moyen d'une ligne de mesure (132) et est conçu pour détecter une tension de fonctionnement réelle des diodes luminescentes rouges du dispositif d'éclairage (7) et pour ouvrir l'interrupteur électronique (130) lorsque la tension de fonctionnement réelle s'écarte d'une tension de fonctionnement de consigne.

6. Appareil de commande d'urgence (1) selon la revendication 5, **caractérisé en ce que** le premier dispositif de diagnostic (13) comprend un moyen comparateur, en particulier un moyen comparateur à fenêtre, qui est raccordé à la ligne de mesure (132) et à l'interrupteur électronique (130), et est conçu pour détecter la tension de fonctionnement réelle des diodes luminescentes rouges du dispositif d'éclairage (7) et pour ouvrir un interrupteur électronique (130) lorsque la tension de fonctionnement réelle s'écarte de la tension de fonctionnement de consigne.

7. Appareil de commande d'urgence (1) selon l'une quelconque des revendications 1 à 6, **caractérisé en ce que** l'appareil de commande d'urgence (1) comprend un second dispositif de diagnostic (14) qui comporte un interrupteur électronique (140) qui est agencé dans au moins un des deux chemins de commutation électriques (5, 6), lequel second dispositif de diagnostic (14) est conçu pour détecter la tension d'alimentation électrique du dispositif d'éclairage (7) par l'intermédiaire d'une ligne de mesure (142) et pour ouvrir l'interrupteur électronique (140) lorsque la tension d'alimentation réelle s'écarte d'une tension d'alimentation de consigne.

8. Appareil de commande d'urgence (1) selon l'une quelconque des revendications 1 à 7, **caractérisé en ce que** l'appareil de commande d'urgence (1) comporte un interrupteur électronique (12) qui est associé au circuit de clignotement (9) et qui est raccordé au dispositif d'éclairage (7) de telle sorte que le clignotement des diodes luminescentes jaunes du dispositif d'éclairage (7) peut être activé au moyen de l'interrupteur électronique (12) et du circuit de clignotement (9).

9. Appareil de commande d'urgence (1) selon l'une quelconque des revendications 1 à 8, **caractérisé en ce que** l'élément d'actionnement (30) et l'élément d'arrière-plan (33) sont fabriqués en une matière plastique semi-transparente qui apparaît de préférence grise lorsqu'elle n'est pas éclairée.

10. Dispositif de sécurité (100) pour faire passer une machine ou installation technique présentant un danger dans un état de fonctionnement sans risque, comprenant
- une unité de contrôle et d'évaluation (4), qui comporte au moins une sortie de sécurité (40) à laquelle est raccordé un élément de réglage (20) qui est conçu pour, après l'activation, faire passer la machine ou installation technique dans l'état de fonctionnement sans risque, ainsi que
- au moins un appareil de commande d'urgence (1), qui est raccordé à l'unité de contrôle et d'évaluation (4),
**caractérisé en ce que** l'appareil de commande d'urgence (1) est réalisé selon l'une quelconque des revendications 1 à 9.
